# EUROPEAN PATENT APPLICATION

(11) **EP 2 674 846 A2**
(43) Date of publication of application: **18.12.2013**
(21) Application number: 13164550.9
(22) Date of filing: 19.04.2013
(51) Int. Cl.: G06F 3/0487

(54) **Information terminal device and display control method**

(30) Priority: 11.06.2012 JP 2012132242
(71) Applicant: FUJITSU LIMITED, Kawasaki-shi, Kanagawa 211-8588 (JP)
(72) Inventor: Fukushima, Daiki, Kawasaki-shi, Kanagawa 211-8588 (JP); Takazawa, Naoki, Kawasaki-shi, Kanagawa 211-8588 (JP); Akama, Katsuaki, Kawasaki-shi, Kanagawa 211-8588 (JP)
(74) Representative: Keltsch, Ulrike

(57) **Abstract**

An information terminal device includes a displaying unit that displays information, a detecting unit that detects, when contact is made with a displayed screen of the displaying unit, a contact position and contact pressure, and a processor. The processor executes a process including storing, in a storing unit, a contact state indicating whether the contact pressure detected by the detecting unit is equal to or greater than a predetermined threshold, and controlling displaying on the displaying unit in accordance with the contact position detected by the detecting unit and the contact state that is stored in the storing unit.

## Description

### FIELD

The embodiment discussed herein is related to an information terminal device and a display control method.

### BACKGROUND

In recent years, touch panels have been widely used on information terminal devices, such as mobile phones. Information terminal devices with a touch panel mounted thereon can receive an operation input by detecting a user's finger touching a screen that displays information. Consequently, the user can operate intuitively, which improves the convenience of the information terminal devices.

Furthermore, in recent years, there has been a technology that receives an operation input by distinguishing a first touch, in which a user approaches or briefly touches a touch panel, from a second touch, in which a user presses the touch panel with more pressure. By distinguishing between these two types of touch, a different process can be allocated to each touch, which in turn improves the flexibility of the operation performed by each touch.
Patent Document 1: Japanese Laid-open Patent Publication No. 2011-192277

As described above, by distinguishing the first touch from the second touch, two different processes can be performed as a series of an operation in which a user briefly touches the touch panel and then continues to press the touch panel without releasing his/her finger. However, for example, if the displayed screen of the touch panel is switched due to the second touch, the user needs to release his/her finger once from the touch panel and re-touch the touch panel.

Specifically, an example of a process that uses these two types of touch includes a process for selecting, by using the first touch, one of the names in a list displayed on the touch panel and displaying, by using the second touch, the telephone number of the selected name. At this point, because the telephone number is displayed due to the second touch, the displayed screen of the touch panel is switched after the second touch. Then, on the newly displayed screen, in addition to the telephone number, it is conceivable to display a button or the like that is used to output the user's voice to the destination given by the telephone number selected by using the second touch. Consequently, a user who wants to output his/her voice to the selected telephone number needs to touch a button or the like that is displayed on the switched displayed screen. However, in order to touch this button or the like, the user needs to release his/her finger once from the touch panel and re-touch the touch panel; therefore, there is a problem in that the operation thereof is inconvenient.

Accordingly, it is an object in one aspect of an embodiment of the invention to provide an information terminal device and a display control method that can perform a process desired by a user with a simple operation without placing a burden on the user.

### SUMMARY

According to an aspect of an embodiment, an information terminal device includes a displaying unit that displays information, a detecting unit that detects, when contact is made with a displayed screen of the displaying unit, a contact position and contact pressure, and a processor. The processor executes a process including storing, in a storing unit, a contact state indicating whether the contact pressure detected by the detecting unit is equal to or greater than a predetermined threshold, and controlling displaying on the displaying unit in accordance with the contact position detected by the detecting unit and the contact state that is stored in the storing unit.

### BRIEF DESCRIPTION OF DRAWINGS

FIG. 1 is a schematic diagram illustrating an external view of a mobile terminal device according to an embodiment;
FIG. 2 is a block diagram illustrating the configuration of the mobile terminal device according to the embodiment;
FIG. 3 is a schematic view illustrating the configuration of a touch detecting unit according to the embodiment;
FIG. 4 is a functional block diagram illustrating the function of a processor according to the embodiment;
FIG. 5 is a schematic view illustrating an example of determination thresholds according to the embodiment;
FIG. 6 is a flowchart illustrating the operation of the mobile terminal device according to the embodiment;
FIG. 7 is a flowchart illustrating a touch takeover process according to the embodiment; and
FIG. 8 is a schematic diagram illustrating an example of a screen shift of the mobile terminal device according to the embodiment.

### DESCRIPTION OF EMBODIMENT

Preferred embodiment of the present invention will be explained with reference to accompanying drawings. In the embodiment, a description will be given of a mobile terminal device, such as a mobile phone, as an example of the information terminal device; however, the present invention is not limited to the embodiment.

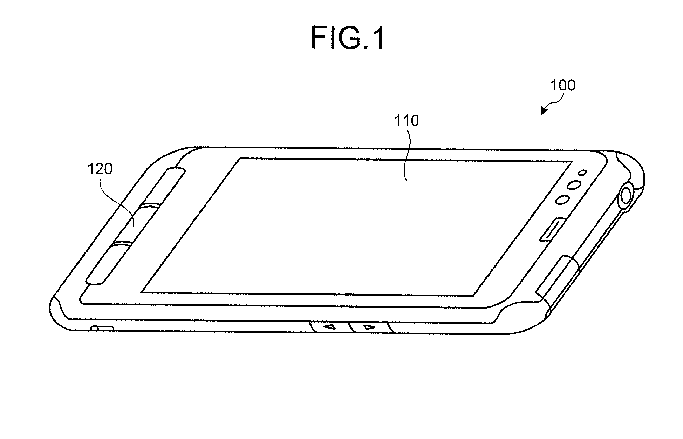

FIG. 1 is a schematic diagram illustrating an external view of a mobile terminal device 100 according to an embodiment. The mobile terminal device 100 illustrated in FIG. 1 includes a touch detecting unit 110 and an operation key 120.

The touch detecting unit 110 is arranged on the face of the mobile terminal device 100, detects a touch performed by a user's finger, and receives an operation input as a result of this contact. Specifically, if the touch detecting unit 110 is touched by a user's finger, the touch detecting unit 110 detects the coordinates of the position touched by the user (hereinafter, referred to as the "touch coordinates"). Furthermore, the touch detecting unit 110 measures the pressure applied by the touch (hereinafter, referred to as the "touch pressure"). Consequently, the touch detecting unit 110 can detect multiple types of touch on the basis of the different kinds of measured touch pressure even if a touch is detected at the same touch coordinates.

The touch detecting unit 110 is formed from a transparent or translucent material. The displayed screen of the displaying unit arranged on the back face of the touch detecting unit 110 is visible. Consequently, by touching the touch detecting unit 110, a user can operate intuitively as if directly touching the displayed screen.

The operation key 120 is a physical key that can be pressed and receives an operation input by a user pressing the operation key 120. Specifically, the operation key 120 includes physical keys or the like that are used to switch on or off the power supply of, for example, the mobile terminal device 100. The touch detecting unit 110 and the operation key 120 receive operation inputs in a complementary manner, thereby allowing the mobile terminal device 100 to perform various functions.

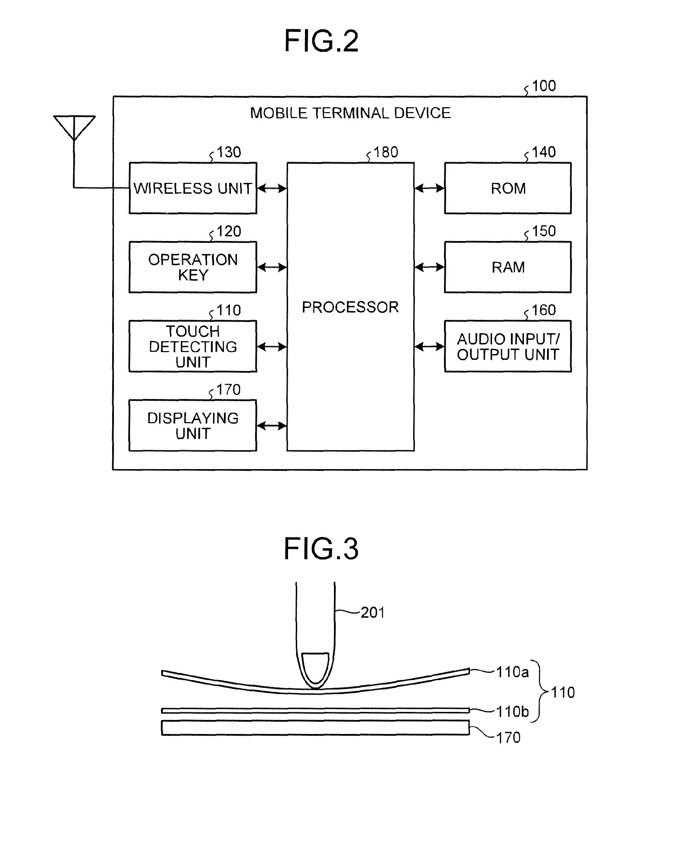

FIG. 2 is a block diagram illustrating the configuration of the mobile terminal device 100 according to the embodiment. The mobile terminal device 100 illustrated in FIG. 2 includes the touch detecting unit 110, the operation key 120, a wireless unit 130, a read only memory (ROM) 140, a random access memory (RAM) 150, an audio input/output unit 160, a displaying unit 170, and a processor 180.

As described above, the touch detecting unit 110 detects the touch coordinates touched by a user, measures touch pressure, and receives an operation input. Furthermore, the touch detecting unit 110 includes a touch panel that detects, for example, the touch coordinates and a pressure sensor that measures touch pressure. The touch detecting unit 110 detects the touch coordinates and touch pressure by using the touch panel and the pressure sensor.

Specifically, for example, as illustrated in FIG. 3, the touch detecting unit 110 includes a first panel 110a arranged on the front face side of the mobile terminal device 100 and a second panel 110b arranged on the displaying unit 170 side. An electrode (not illustrated) is arranged on each of the first panel 110a and the second panel 110b. Then, the first panel 110a detects the touch coordinates of the point at which a finger 201 of a user makes contact with it. Furthermore, if the first panel 110a is pressed and the distance between the first panel 110a and the second panel 110b varies, the touch detecting unit 110 measures touch pressure due to the variation in the distance. Specifically, the touch detecting unit 110 detects the capacitance between, for example, the first panel 110a and the second panel 110b and obtains the touch pressure on the basis of the detected capacitance. The touch detecting unit 110 outputs, to the processor 180, touch detection information containing information on both the touch coordinates and the touch pressure. Furthermore, the operation key 120 receives an operation input together with the touch detecting unit 110 in a complementary manner.

The wireless unit 130 receives a signal via an antenna and outputs the received signal to the processor 180. Furthermore, the wireless unit 130 transmits a signal created by the processor 180 via the antenna. If the mobile terminal device 100 is, for example, a mobile phone that can make a call, the wireless unit 130 transmits or receives a signal containing a user's output voice, received voice, or the like.

The ROM 140 and the RAM 150 are storing units that store therein a program, data, or the like executed by the processor 180.

The audio input/output unit 160 includes an audio input device, such as a microphone, and an audio output device, such as a speaker. If, the mobile terminal device 100 is, for example, a mobile phone that can make a call, the audio input/output unit 160 receives an input of a user's output voice or outputs a received voice.

The displaying unit 170 is arranged such that the displaying unit 170 is overlapped with the touch detecting unit 110 and displays the display screen information that is output from the processor 180. Specifically, if the processor 180 executes an application program and thus creates display screen information containing the content that is in accordance with the execution result, the displaying unit 170 displays the created display screen information. Accordingly, if the content of the display varies depending on the process performed by, for example, an application, the displaying unit 170 switches the screen in accordance with the process performed by the application.

The processor 180 includes, for example, a central processing unit (CPU) or a micro processing unit (MPU) and executes overall control of the mobile terminal device 100 by using the data stored in the ROM 140 and the RAM 150. For example, the processor 180 detects that a touch event has occurred on the basis of the touch detection information that is output from the touch detecting unit 110 and manages a touch state, such as the touch coordinates or touch pressure. Furthermore, the processor 180 executes various applications and controls a process performed by each application in conjunction with the touch state.

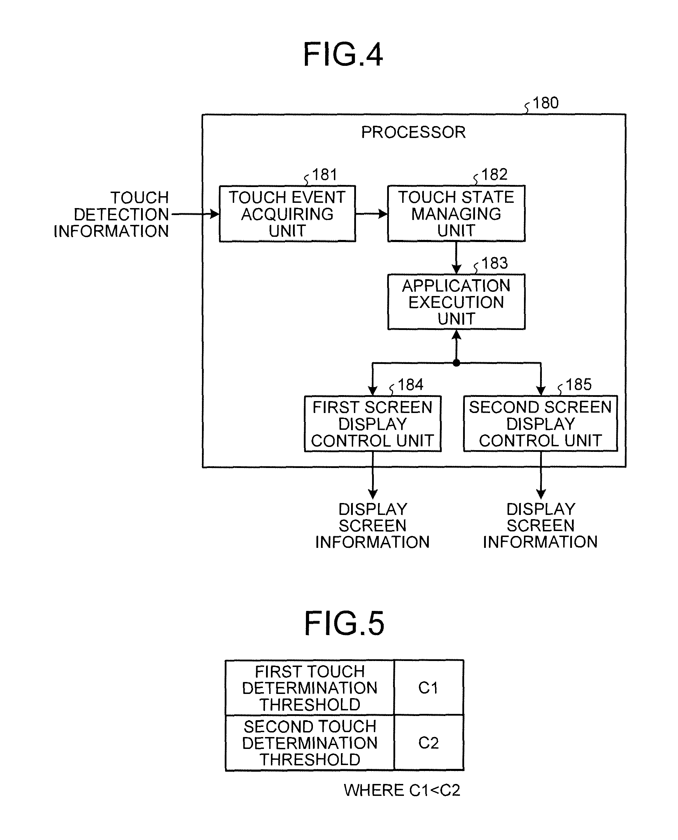

FIG. 4 is a functional block diagram illustrating the function of the processor 180 according to the embodiment. The processor 180 illustrated in FIG. 4 includes a touch event acquiring unit 181, a touch state managing unit 182, an application execution unit 183, a first screen display control unit 184, and a second screen display control unit 185.

The touch event acquiring unit 181 acquires, from the touch detecting unit 110, touch detection information containing information on both the touch coordinates and touch pressure. Then, the touch event acquiring unit 181 detects that a touch event with respect to the touch detecting unit 110 has occurred and notifies the touch state managing unit 182 of the touch coordinates and the touch pressure related to the touch event. Furthermore, if the touch event has occurred and if the touch detection information is not being acquired any more from the touch detecting unit 110, the touch event acquiring unit 181 detects that the touch event has ended and notifies the touch state managing unit 182 to that effect.

If the touch state managing unit 182 receives a notification from the touch event acquiring unit 181 indicating the touch coordinates and the touch pressure, the touch state managing unit 182 determines the touch state. Specifically, the touch state managing unit 182 has, for example, the determination thresholds illustrated in FIG. 5 and compares the touch pressure with each of the determination thresholds. If the touch pressure is equal to or greater than a first touch determination threshold C1 and is less than a second touch determination threshold C2, the touch state managing unit 182 determines that a first touch having relatively small touch pressure has been performed at the touch coordinates. Furthermore, if the touch pressure is equal to or greater than the second touch determination threshold C2, the touch state managing unit 182 determines that a second touch having relatively large touch pressure has been performed at the touch coordinates.

If the touch state managing unit 182 determines that the first touch has been performed, the touch state managing unit 182 sets a touch state management flag to "touch continuation". In contrast, if the touch state managing unit 182 receives a notification from the touch event acquiring unit 181 indicating that a touch event has ended, the touch state managing unit 182 sets the touch state management flag to "touch end". Consequently, even when, for example, an application to be executed is switched, the touch state managing unit 182 can centrally manages, by using the touch state management flag, whether the first touch continues. The touch state managing unit 182 notifies the application execution unit 183 of the touch coordinates and the presence or absence of the first touch and the second touch.

If the application execution unit 183 receives a notification of the touch coordinates and the presence or absence of the first touch and the second touch, the application execution unit 183 executes an application process in accordance with these pieces of touch information. Furthermore, the application execution unit 183 instructs the first screen display control unit 184 and the second screen display control unit 185 to control the displaying done by the displaying unit 170 in accordance with the application process. Specifically, if a first screen is displayed on the displaying unit 170, the application execution unit 183 instructs the first screen display control unit 184 to control the displaying. Similarly, if a second screen is displayed on the displaying unit 170, the application execution unit 183 instructs the second screen display control unit 185 to control the displaying.

When the application execution unit 183 instructs the first screen display control unit 184 or the second screen display control unit 185 to control the displaying, the application execution unit 183 notifies them of the touch coordinates and the presence or absence of the first touch and the second touch. Furthermore, if a screen is switched due to a process performed by an application, the application execution unit 183 boots up a display control unit associated with the switched screen. Specifically, for example, in an application that is being executed, if a process that switches from the first screen to the second screen is performed due to an operation by a user, the application execution unit 183 newly boots up the second screen display control unit 185. At this point, the application execution unit 183 refers to the touch state management flag in the touch state managing unit 182. If "touch continuation" is set, the touch state managing unit 182 notifies the second screen display control unit 185 to that effect together with the touch coordinates. Consequently, the second screen display control unit 185, which is newly booted up, controls, from the very beginning of the boot up, the displaying that is to be performed when the first touch is detected.

The first screen display control unit 184 and the second screen display control unit 185 control the display at the first screen and the second screen, respectively, in accordance with the instruction received from the application execution unit 183. FIG. 4 illustrates two display control units; however, three or more display control units may also be arranged on respective screens. These display control unit creates display screen information on the basis of information containing, for example, the touch coordinates received from the application execution unit 183 and outputs the display screen information to the displaying unit 170.

Specifically, for example, if an application that is being executed is a telephone book application, the first screen display control unit 184 creates display screen information containing the name list displayed as the first screen when an application is booted up. Then, if the first screen display control unit 184 receives a notification from the application execution unit 183 indicating that the first touch has been performed, the first screen display control unit 184 creates display screen information that is displayed such that the name displayed at the touch coordinates is distinguishable from the names displayed at the surroundings. Specifically, for example, the first screen display control unit 184 highlights the name that is being displayed at the touch coordinates. Furthermore, the first screen display control unit 184 creates display screen information in which other names being displayed are normally displayed.

For a method of distinguishably displaying a currently displayed name at the touch coordinates from the other currently displayed name, in addition to using a highlighted display, display color or display density may also be used as a distinction or a display using motion animation may also be used as a distinction. In the description below, displaying the area at the touch coordinates in way that is distinguishable from the surrounding area is referred to as a "focus display".

At this point, on the first screen, if the second touch is performed on a name subjected to the focus display, the application execution unit 183 performs a process for switching the screen to the second screen in which the telephone number associated with the name subjected to the second touch is displayed. Consequently, the application execution unit 183 newly boots up the second screen display control unit 185 and creates, as the second screen, display screen information that displays the telephone number. At this point, if the touch state management flag is set to "touch continuation", the second screen display control unit 185 receives a notification from the application execution unit 183 indicating to that effect; therefore, the second screen display control unit 185 creates display screen information that is used when the touch coordinates has been subjected to the first touch. Consequently, if the touch state management flag is set to "touch continuation", the second screen display control unit 185 controls, from the very beginning of the boot up, the display that is performed when the first touch is detected.

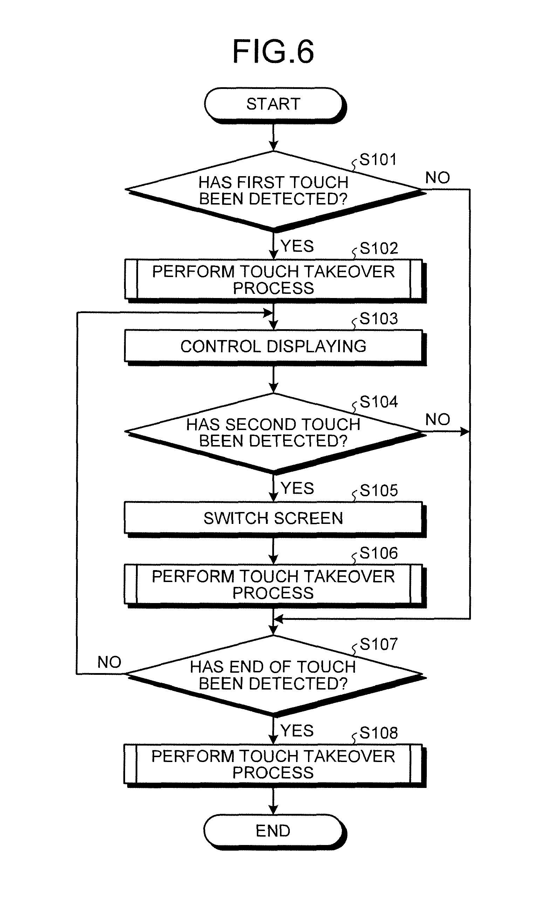

In the following, the operation of the mobile terminal device configured as described above will be described with reference to the flowchart illustrated in FIG. 6.

The touch event acquiring unit 181 in the processor 180 monitors an output of the touch detection information from the touch detecting unit 110. If the touch event acquiring unit 181 acquires touch detection information containing both touch coordinates and touch pressure, the touch event acquiring unit 181 sends the notification indicating both the touch coordinates and the touch pressure to the touch state managing unit 182. The touch state managing unit 182 determines whether the touch pressure is equal to or greater than the first touch determination threshold, thereby determining whether the first touch has been detected (Step S101). If the determination result indicates that the touch pressure is equal to or greater than the first touch determination threshold and is less than the second touch determination threshold, it means the first touch has been detected (Yes at Step S101) and the touch state managing unit 182 consequently performs a touch takeover process for taking over the first touch when the screen is switched (Step S102). Specifically, the touch state managing unit 182 sets the touch state management flag to "touch continuation".

Furthermore, if the first touch has been detected, the application execution unit 183 receives a notification indicating that the touch coordinates and the first touch have been detected and then performs a process in accordance with the first touch. Specifically, for example, if the application execution unit 183 executes the telephone book application, the application execution unit 183 performs a process for selecting, on the first screen on which names are listed and displayed, a name that is being displayed at the touch coordinates and that has been subjected to the first touch. At this point, the application execution unit 183 instructs the first screen display control unit 184 to control the displaying of the first screen. The first screen display control unit 184 that has received the instruction controls the displaying such that the name, which is touched by the first touch and is being displayed on the touch coordinates, is subjected to the focus display (Step S103). Consequently, during the time period for which the first touch is being detected, controlling of the displaying is performed in which the focus display is moved in accordance with the movement of the touch coordinates. With this controlling of the displaying, the name that is being selected by the first touch becomes visible for a user in real time.

A user viewing the selected name presses with a greater touch pressure on the name area in which the desired name is subjected to the focus display. At this point, the touch event acquiring unit 181 acquires the touch detection information containing both the touch coordinates and the touch pressure and notifies the touch state managing unit 182 to that effect. Then, the touch state managing unit 182 determines whether the touch pressure is equal to or greater than the second touch determination threshold, thereby determining whether the second touch has been detected (Step S104). If the determination result indicates that the second touch has not been detected (No at Step S104), the first screen display control unit 184 continue to control the displaying, in which the focus display of the touch coordinates subjected to the first touch is moved, until the touch end is detected.

In contrast, if the comparison result between the touch pressure and the second touch determination threshold indicates that the touch pressure is equal to or greater than the second touch determination threshold, it means the second touch has been detected (Yes at Step S104) and the application execution unit 183 consequently switches the screen to a screen that is associated with the second touch (Step S105). Specifically, for example, in a case of executing the telephone book application described above, the screen is switched such that the second screen that displays the telephone number that is associated with the name selected by the first touch is displayed. Consequently, the application execution unit 183 newly boots up the second screen display control unit 185 and then the second screen display control unit 185 creates display screen information on the second screen on which the telephone number associated with the selected name is displayed.

Furthermore, if the screen is switched from the first screen to the second screen, the touch takeover process for taking over the first touch is also performed (Step S106). Specifically, the application execution unit 183 refers to the touch state management flag in the touch state managing unit 182. If "touch continuation" is set, the second screen display control unit 185 receives a notification to that effect together with the touch coordinates. Consequently, the second screen display control unit 185, which has been booted up, controls, from the very beginning of the boot up, the displaying that is performed when the first touch has been detected. Accordingly, if the second screen display control unit 185 receives a notification indicating that "touch continuation" is set, the second screen, in which a button or the like displayed at the touch coordinates is subjected to the focus display, is displayed on the displaying unit 170 at the same time as the screen is switched.

As described above, in the embodiment, because the touch state managing unit 182 sets, in the touch state management flag, the information indicating whether the first touch is present, the first touch can be taken over even if the screen is switched. Consequently, even if the screen is switched within the same application or is switched over multiple applications, the first touch can still be taken over. Consequently, a user can continue the operation on the switched screen without releasing his/her finger even once from the screen. This makes it possible to perform a process desired by a user with a simple operation without placing a burden on the user.

As described above, a user can operate the mobile terminal device 100 without releasing his/her finger or the like when touching on the touch detecting unit 110. Furthermore, the touch event acquiring unit 181 and the touch state managing unit 182 also monitor the end of a touch (Step S107). Specifically, if touch detection information is not output anymore because the user releases his/her finger from the touch detecting unit 110, the touch event acquiring unit 181 detects the end of the touch. Furthermore, although the touch detection information is output, if touch pressure becomes less than the first touch determination threshold, the touch state managing unit 182 also detects the end of the touch. Namely, the touch end is also detected when the first touch is not detected at Step S101 (No at Step S101).

If the touch end has been detected (Yes at Step S107), a touch takeover process for completing the take over of the first touch is performed (Step S108). Specifically, the touch state managing unit 182 sets the touch state management flag to "touch end". Furthermore, if the touch end is not detected (No at Step S107), the second screen display control unit 185 continues to control the displaying such that the focus display at the touch coordinates that are subjected to the first touch is moved.

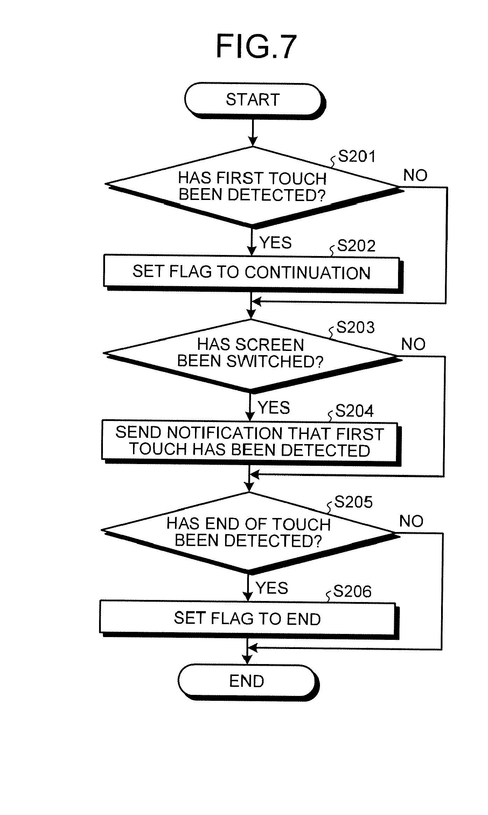

In the following, the touch takeover process according to the embodiment will be described with reference to the flowchart illustrated in FIG. 7. The touch takeover process is mainly performed by the touch state managing unit 182 and the application execution unit 183.

If the touch event acquiring unit 181 acquires the touch detection information, the touch state managing unit 182 compares the touch pressure with the first touch determination threshold and with the second touch determination threshold (Step S201). If the comparison result indicates that the touch pressure is equal to or greater than the first touch determination threshold and is less than the second touch determination threshold, it means the first touch has been detected (Yes at Step S201).

Accordingly, as the touch takeover process to be performed in this case, the touch state managing unit 182 sets the touch state management flag to "touch continuation" (Step S202). Consequently, the touch state managing unit 182 can centrally manage the continuation of the first touch and thus it is possible to take over the first touch even if the screen is switched or even if the application that is being executed is switched.

In contrast, if the first touch has not been detected (No at Step S201), the application execution unit 183 determines whether the screen has been switched (Step S203). If the determination result indicates that an operation for switching the displayed screen to, for example, the second screen for the second touch has been performed, the application execution unit 183 determines that the screen has been switched (Yes at Step S203).

Accordingly, as the touch takeover process to be performed in this case, the application execution unit 183 refers to the touch state management flag. If "touch continuation" is set, a notification indicating that the first touch has been detected is sent to the display control unit that controls the displaying of the switched screen (Step S204). Specifically, for example, when the second screen display control unit 185 controls the displaying of the switched screen, the application execution unit 183 notifies the second screen display control unit 185 that the first touch has been detected. Consequently, on the new displayed screen that has been switched, from the start of the displaying, the displaying associated with the first touch is performed, e.g., a button or the like that is being displayed at the touch coordinates is subjected to the focus display.

In contrast, if the screen has not been switched (No at Step S203), the touch state managing unit 182 determines whether the end of touch has been detected (Step S205). Specifically, the touch end is detected if the touch detection information is not output from the touch detecting unit 110 anymore or if the touch pressure contained in the touch detection information becomes less than the first touch determination threshold (Yes at Step S205).

Consequently, as the touch takeover process to be performed in this case, the touch state managing unit 182 sets the touch state management flag to "touch end" (Step S206). By doing so, the taking over of the first touch performed when the screen has been switched is reset and thus the state of the screen returns to the initial state.

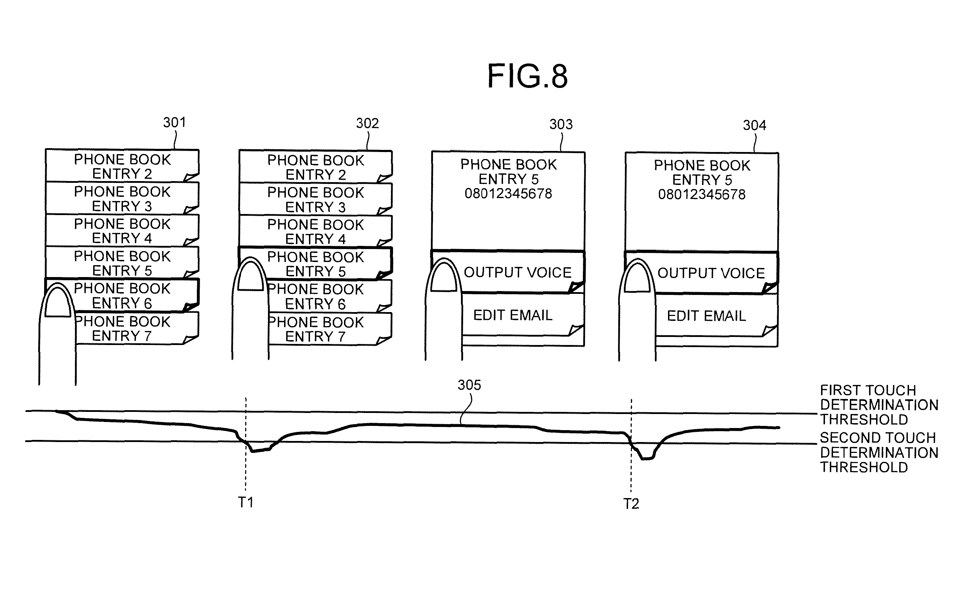

In the following, an example of a screen shift on the displaying unit 170 according to the embodiment will be described with reference to FIG. 8. FIG. 8 illustrates screens 301 to 304 of the displaying unit 170 in the mobile terminal device 100 that is executing the telephone book application and illustrates variation in touch pressure over time 305. A value of touch pressure increases as the line representing the variation in touch pressure over time 305 falls in FIG. 8.

In FIG. 8, for the time period up to time T1, because the touch pressure is equal to or greater than the first touch determination threshold and is less than the second touch determination threshold, the first touch has been detected. Consequently, on the screen 301 on which multiple phone book entries are displayed, the phone book entry subjected to the focus display is switched in accordance with the movement of the user's finger. Specifically, the phone book entry displayed at the touch coordinates is subjected to the focus display in real time. On the screen 301 illustrated in FIG. 8, the button of the "phone book entry 6" touched by the user's finger is subjected to the focus display. Furthermore, FIG. 8 illustrates an example of the focus display in which the outer circumference of the button displayed at the touch coordinates is displayed with a bold frame.

In this state, by moving the user's finger or the like while continuing to touch the touch detecting unit 110, the phone book entry subjected to the focus display can be switched. Specifically, the user moves the focus display while moving the touched finger and searches for the desired phone book entry. Then, when the user moves his/her finger to the point of the "phone book entry 5", where the desired phone book entry is located, the button of the "phone book entry 5" is subjected to the focus display, as illustrated on the screen 302.

The user who has performed the focus display on the desired phone book entry performs the operation of pressing harder on the button of the "phone book entry 5". Consequently, at time T1, the touch pressure becomes equal to or greater than the second touch determination threshold and thus the second touch is detected. Consequently, the screen of the displaying unit 170 has been switched and the telephone number associated with the "phone book entry 5" that is subjected to the second touch is displayed. On the screen 303 at this time, in addition to the telephone number of the phone book entry 5, a button that is used to perform a voice output to the destination of the telephone number and a button used to edit an email are displayed.

The screen of the displaying unit 170 is switched in this way; however, a value of the touch pressure is maintained such that the value is equal to or greater than the first touch determination threshold and is less than the second touch determination threshold. This state is maintained without a user releasing his/her finger from the touch detecting unit 110. Consequently, in the embodiment in which the state of the touch is centrally managed by using the touch state management flag, a notification indicating that the first touch is detected is sent to the display control unit that controls the displaying of the switched screen. Accordingly, on the screen 303 that has been switched, the button of "voice output" displayed at the touch coordinates is also subjected to the focus display from the start of the displaying.

Then, if a user presses harder on the button of "voice output", at the time T2, the touch pressure becomes equal to or greater than the second touch determination threshold and thus the second touch is detected. Consequently, for example, a telephone application is newly booted up and a voice output to the telephone number displayed on the screen 304 is performed. As described above, a user can perform a series of operations, i.e., from selecting a phone book entry to outputting a voice, while continuing to touch the touch detecting unit 110.

As described above, according to the embodiment, in the mobile terminal device that detects the touch coordinates and touch pressure, multiple kinds of touch states are detected depending on the touch pressure, and the detected touch states are centrally managed by using the touch state management flag. If a screen has been switched, the touch state management flag is referred to and the previous touch state obtained before the switching is maintained even on a screen that has been switched. Consequently, a user can perform various operations while continuing to touch the screen without releasing the touched finger once. In other words, it is possible to perform a process desired by a user with a simple operation without placing a burden on the user.

In the embodiment described above, a description has been given of a case in which a screen is switched mainly in the same application. However, even when the screen is switched in accordance with the switching of the application that is being executed, because the touch state is centrally managed by the touch state managing unit 182, the touch state can be taken over among multiple applications.

It is possible to describe the operation of the mobile terminal device 100, which has been described above in the embodiment, as a program that can be executed by a computer. In such a case, the program may also be stored in a computer readable recording medium and installed in the computer. Examples of the computer readable recording medium includes a portable recording medium, such as a CD-ROM, a DVD disk, a USB memory, and the like or a semiconductor memory, such as a flash memory and the like.

According to an aspect of the information terminal device and the display control method disclosed in the present invention, an advantage is provided in that a desired process can be performed with a simple operation without placing a burden on a user.

## Claims

1. An information terminal device (100) comprising:
a displaying unit (170) that displays information;
a detecting unit (110) that detects, when contact is made with a displayed screen of the displaying unit (170), a contact position and contact pressure; and
a processor (180), wherein the processor executes a process comprising:
storing, in a storing unit (182), a contact state indicating whether the contact pressure detected by the detecting unit is equal to or greater than a predetermined threshold; and
controlling displaying on the displaying unit (170) in accordance with the contact position detected by the detecting unit (110) and the contact state that is stored in the storing unit (182).

2. The information terminal device (100) according to claim 1, wherein, the controlling includes controlling the displaying such that, when the displayed screen of the displaying unit (170) is switched, the contact state that is stored in the storing unit (182) is maintained on displayed screen after being switched.

3. The information terminal device (100) according to claim 1 or 2, wherein the storing includes:
determining that a first touch is detected, when the contact pressure detected by the detecting unit (110) is equal to or greater than a first threshold and is less than a second threshold, and determining that a second touch is detected, when the contact pressure is equal to or greater than the second threshold; and
storing, in the storing unit (182), a contact state indicating that a contact with respect to the displayed screen continues, when it is determined that the first touch is detected.

4. The information terminal device (100) according to any one of claims 1 to 3, wherein the storing includes storing, in the storing unit (182), a contact state indicating that a contact with respect to the displayed screen does not occur, when the contact pressure is not detected by the detecting unit (110) or when the contact pressure detected by the detecting unit (110) is less than a first threshold.

5. The information terminal device (100) according to claim 2, wherein the controlling includes controlling the displaying such that, when the contact state stored in the storing unit (182) indicates that the contact pressure is equal to or greater than the predetermined threshold, an area associated with the contact position is displayed, on the displayed screen after being switched, in a manner distinguishable from a surrounding area.

6. The information terminal device (100) according to any one of claims 1 to 5, wherein the detecting unit (110) includes
a touch panel (110a) that detects the contact position, and
a pressure sensor that detects the contact pressure.

7. A display control method comprising:
displaying information on a screen;
detecting, when contact is made with the displayed screen, a contact position and contact pressure;
storing a contact state indicating whether the detected contact pressure is equal to or greater than a predetermined threshold; and
controlling displaying on the displayed screen in accordance with the detected contact position and the stored contact state.

8. A computer readable storage medium having stored therein a display control program causing a computer to execute a process comprising:
displaying information on a screen;
detecting, when contact is made with the displayed screen, a contact position and contact pressure;
storing a contact state indicating whether the detected contact pressure is equal to or greater than a predetermined threshold; and
controlling displaying on the displayed screen in accordance with the detected contact position and the stored contact state.
